# EUROPEAN PATENT APPLICATION

(11) **EP 0 999 713 A2**
(43) Date of publication of application: **10.05.2000**
(21) Application number: 99308681.8
(22) Date of filing: 02.11.1999
(51) Int. Cl.: H04Q 3/66

(54) **Automatic communications routing system and method**

(30) Priority: 02.11.1998 SG 9804024
(71) Applicant: Singtel Yellow Pages Pte Ltd, Singapore 319637 (SG)
(72) Inventor: Yeo, Eng Choon, Singapore 319637 (SG)
(74) Representative: Smaggasgale, Gillian Helen

(57) **Abstract**

This invention concerns a communications routing system for a telecommunications network, and in another aspect a method of routing communications over a telecommunications network. The invention involves: a call receiving subsystem to receive calls from the telecommunications network. A category identification subsystem to identity the category to which an incoming call relates. An automatic calling forwarding system to connect incoming calls related to a particular category to a call recipient listed for the correct category. An automatic call announcing subsystem to announce incoming calls. A call recipient registration subsystem to receive and record details of call recipients. A call recipient charging subsystem to automatically debit a listed call recipient's account with the network operator, and an advertisement published for each category of data.

## Description

### Technical Field

This invention concerns a communications routing system for a telecommunications network, and in another aspect a method of routing communications over a telecommunications network.

### Summary of the Invention

A first aspect of the invention, as currently envisaged, is a communications routing system for a telecommunications network.

The system includes a call receiving subsystem to receive calls from the telecommunications network. At least some of the calls relate to one of a set of categories. The set of categories is not limited in terms of its size or variety.

A category identification subsystem is employed to identify the category to which an incoming call relates. This is typically arranged to recognise an incoming line that is activated, and is able to infer the category from the line.

An automatic calling forwarding system connects incoming calls related to a particular category to a call recipient listed for the correct category, in appropriate circumstances. The circumstances are agreed in advance by the recipient and the system administrator, and may for instance include specific dates and times, and the comparative frequency that particular recipient is to be selected where there are several to choose from. Alternatively the recipient may secure exclusive rights to a number for a limited time.

Once a call is established between a caller and recipient, an automatic call announcing subsystem may announce the incoming call.

A call recipient registration subsystem may be used to receive and record details of call recipients and details of the category of calls they wish to receive and the circumstances in which calls relating to that category are to be routed to them. This subsystem is interrogated by the automatic call forwarding subsystem to determine where a call is to be routed.

A call recipient charging subsystem may be used to automatically debit a listed call recipient's account with the network operator.

An advertisement is published for each category of data, and the advertisement may display one or more telephone numbers accessible via the telecommunications network for each category.

Use of the invention enables callers to have their calls automatically directed to listed recipients. The recipients may be screened as their details are entered into the registration subsystem by a system administrator so that the callers are automatically routed to the most appropriate recipient according to the advertisement being answered and the availability of the recipient. In this way the callers are able to rely on the administrator, and may decide that they do not need to shop around.

A significant advantage of the routing system is that the system administrator may place the advertisements before the recipients are identified. For the recipients the advantage is that they can take advantage of the advertisements after they have been placed. A particular situation where this is useful is with telephone business directories. Spare advertising space in these directories may be filled with 'open' advertisements directing callers to phone numbers held by the administrator. Advertisements may also be placed so that businesses who have missed the advertising deadline for a directory may still take advantage of the directories services by using the 'open' advertisements.

There is also an advantage for the communications network operator, since use of the system will increase traffic over the network.

In another aspect, as currently envisaged, the invention is a method for routing communications over a telecommunications network, including the following steps:
- Receiving calls from the telecommunications network, at least some of which relate to one of a set of categories.
- Identifying the category to which an incoming call relates.
- Connecting incoming calls related to a particular category to a call recipient listed for the correct category in the appropriate circumstances.
- Announcing the incoming call after the call recipient has answered the call.
- Receiving and recording details of call recipients, details of the category of calls they wish to receive and the circumstances in which calls relating to that category are to be routed to them.
- Automatically debiting the accounts of call recipients according to the circumstances in which calls are to be routed to them.
- And publishing an advertisement for each category of data, which advertisement displays respective telephone numbers accessible via the telecommunications network.

### Brief Description of the Drawings

An example of the invention will now be described with reference to the accompanying drawings, in which:
- Figure 1 is a block diagram of the communications routing system;
- Figures 2, 3 and 4 are together a flow chart showing how a caller is routed to a call recipient.

### Detailed Description of Preferred Embodiments of the Invention

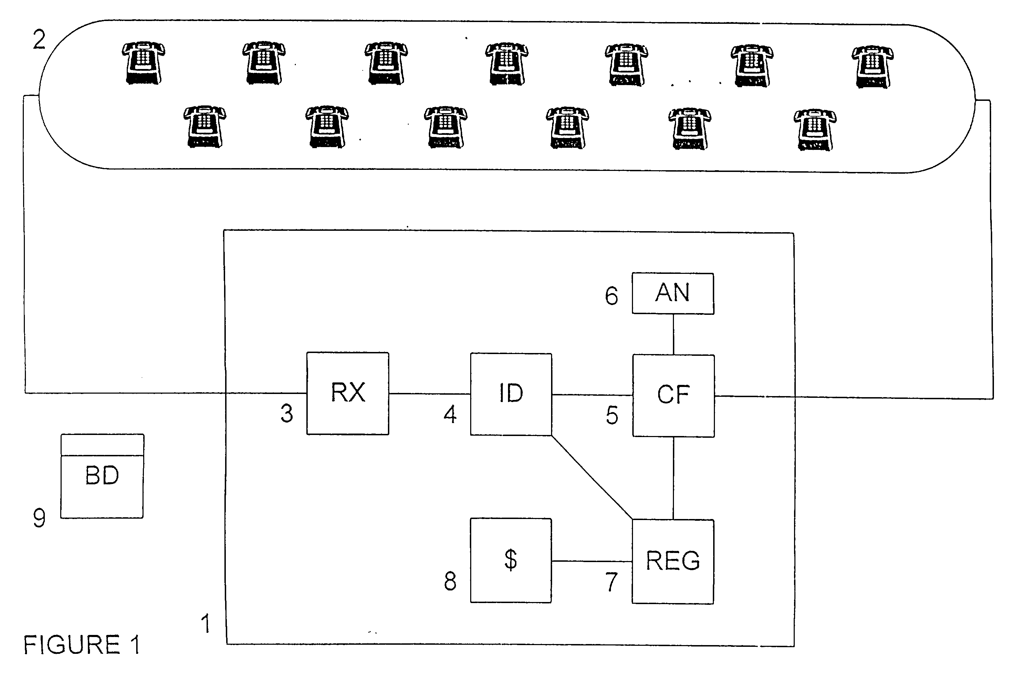

Referring to Figure 1 the communications routing system 1 is connected to a telecommunications network 2. The system includes a call receiving subsystem 3 to receive calls from the telecommunications network. At least some of which relate to one of a set of categories. There is no limit to the number or variety of the categories of advertisement and they may cover. For instance:
Air conditioning Equipment & Supplies
Audio-Visual Aids - Retail
Awnings & Canopies
Beauty Salons
Buses - Charter and Rental
Carpet & Rug Dealers - New
Curtains - Retail
Floors - Material & Laying
Florists - Retail
Furniture Dealers - Retail
Guards & Patrol Service
Insurance
Interior Decorators & Designers
Marble - Natural
Motorcar Renting & Leasing
Movers & Storage Service
Office Furniture & Equipment
Photo Copying
Plumbing Contractors
Printers
Restaurants
Roofing Contractors
Sanitaryware - Retail
Sound Systems & Equipment
Stationers Supplies

The system also includes a category identification subsystem 4 to identity the category to which an incoming call relates. An automatic call forwarding subsystem 5 to connect incoming calls related to a particular category to a call recipient listed for the correct category, in the appropriate circumstances. And an automatic call announcing subsystem 6 to announce the incoming call after the call recipient has answered the call.

A call recipient registration subsystem 7 is provided to receive and record details of call recipient, details of the category of calls they wish to receive, and the circumstances in which calls relating to that category are to be routed to them.

A call recipient charging subsystem 8 is provided for automatically debiting the accounts of call recipients according to the circumstances in which calls are to be routed to them.

A telephone business directory 9 publishes 'open' advertisement for each category of data, in which no advertiser is identified. These advertisements display one or more telephone numbers accessible via the telecommunications network.

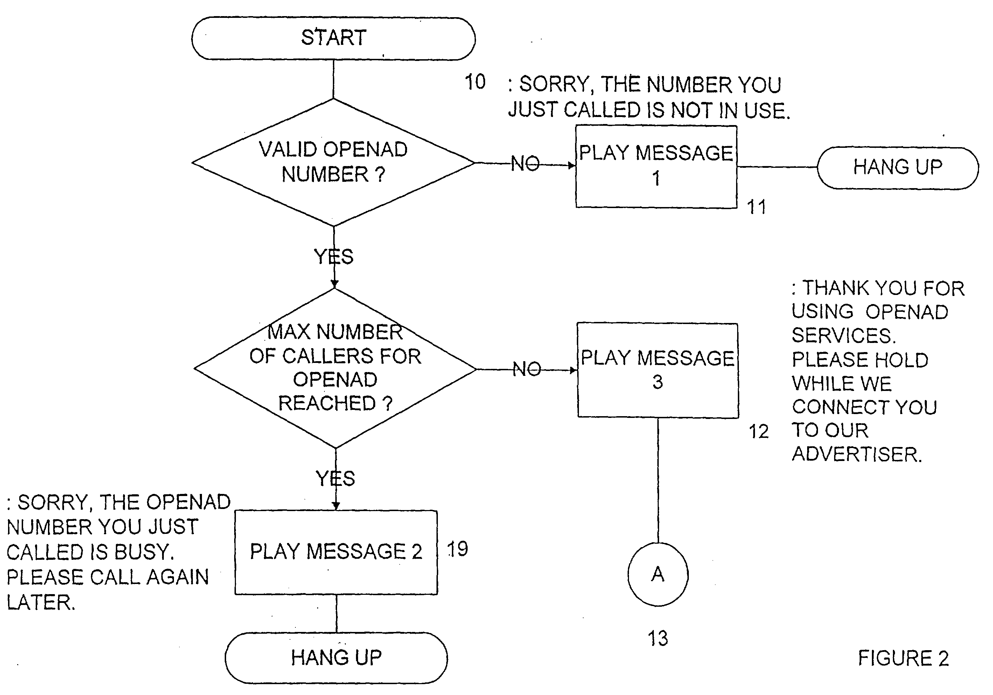

Referring now to Figure 2, a caller who wishes to access a service provider, such a florist, looks in the directory and calls the number indicated in an advertisement for the appropriate service 10. If the number is on one of the 'open' advertisements then the call reaches the communications routing system 1.

Where the telephone numbers displayed in the advertisements are different for each category, then incoming calls for each category arrive on different incoming telephone lines of the call receiving subsystem 3. In this way the category identification subsystem 4 automatically can easily identify the appropriate category for the calls on each line.

Should the caller have called a number for which there are no current recipients, they will be advised by a recorded message that the service is currently unavailable 11.

Similarly, if the incoming line can support more than one call at a time, but the system 1 can only handle one call at a time, then subsequent callers are informed that the line is busy and that they should call back later 19.

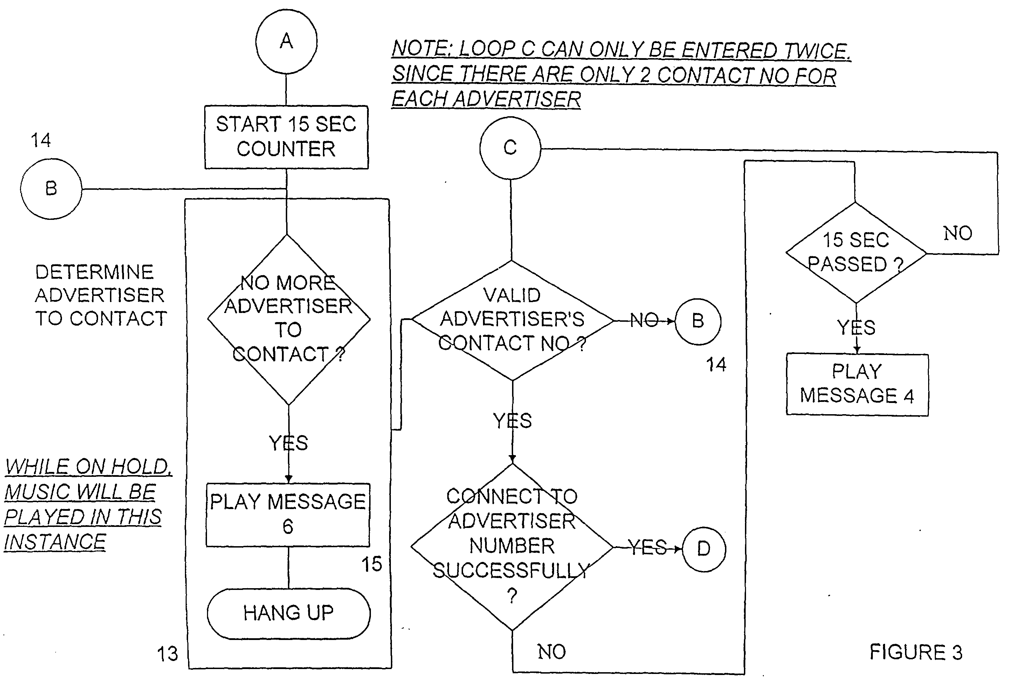

Referring now to Figure 3 as well. If the service is available, then the automatic call announcing subsystem 6 greets the caller with a message advising them that they have called the florist 'open' advertisement, and that their call will be answered shortly 12. Music on hold will then be played while the call is connected to a recipient. The music on hold may be livefeed from radio broadcasts or from a recorded audio file, and it may be interrupted by further announcements designed to hold the caller's interest.

While the announcement is being made the category identification subsystem 4 interrogates the call recipient registration subsystem 7 to determine the first choice recipient to whom the call should be forwarded 13.

Referring now to Figure 3, the automatic call forwarding system 5 receives this information and routs the incoming call to the first choice recipient. Should that recipient be engaged or not answer within a predetermined time, then the call recipient registration subsystem 7 determines the second choice 14 and the call is automatically rerouted by the call forwarding subsystem.

In the event that no recipient can be contacted the call announcing subsystem advises the caller that no one is available at that time to take their call, and invites them to call back later 15.

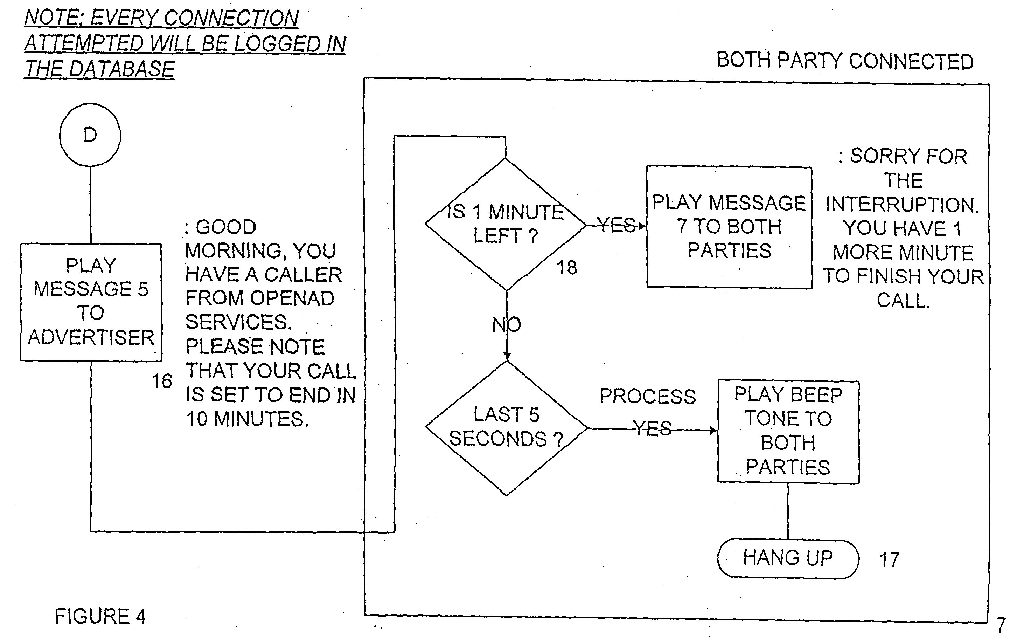

Referring now to Figure 4, once a recipient takes a call 16, the call announcing subsystem announces that the call originates from the routing system and then connects the caller. The caller is able to talk immediately after the announcement to seek the information or service they require, without the recipient having to speak.

The system is configured so that after a predetermined time has passed, say ten minutes, the calls are automatically terminated 17. A warning message is played about one minute before the time is up 18. This frees the advertised number so that another call can be handled.

The call recipients may register with the system administrator by calling a separately advertised number. They indicate what categories of services they wish to be listed for, for instance home delivered food and restaurant services, and the times at which they wish to offer the services together with any other relevant information. For instance, they may only wish to deliver food within a radius of their kitchen and between 6 and 10pm. In addition the recipient may indicate whether they wish to be the first called or whether they will be happy to take a proportion only of the incoming calls.

The administrator may check that the restauranteur has the appropriate qualifications or any other relevant information that may help the administrator to properly advertise the recipient under the chosen category. When agreement is reached the restaurateurs name is added to the call recipient registration subsystem 7, together with all the other relevant details.

The administrator may also perform a credit check against a prospective recipient. Where the prospective recipient is already a subscriber to the communications network, the administrator may be able to run the credit check through their network account. The account may be automatically billed by a call recipient charging subsystem 8 for the listing, for instance at a monthly rate.

Although the invention has been described with reference to a particular example, it should be appreciated that it may be carried out in many alternative manners. For instance, DDI numbers over an ISDN may be used. Rather than yellow pages directories, other directories or sources of published advertisements may be employed by the invention, even newspaper advertisements could be used. Also, a contest module may be added to the call flow.

## Claims

1. A communications routing system for a telecommunications network, including:
- a call receiving subsystem to receive calls from the telecommunications network, at least some of which relate to one of a set of categories;
- a category identification subsystem for identifying the category to which an incoming call relates; and
- an automatic calling forwarding system to connect incoming calls related to a particular category to a call recipient related to the correct category.

2. A communications routing system according to Claim 1, further including a call recipient registration subsystem to receive and record details of call recipient and of the category of calls they wish to receive.

3. A communications routing system according to Claim 2, where the call recipient registration subsystem also receives and records details of the circumstances in which calls relating to that category are to be routed to them, and the automatic calling forwarding system connects calls only in those circumstances.

4. A communications routing system according to anyone of Claims 1 to 3, further including a call recipient charging subsystem for automatically debiting the accounts of call recipients according to the circumstances in which calls are to be routed to them.

5. A communications routing system according to anyone of Claims 1 to 4, further including an automatic call announcing subsystem to announce incoming calls.

6. A communications routing system according to anyone of Claims 1 to 5, where the system is configured so that after a predetermined time has passed the calls are automatically terminated.

7. A communications routing system according to claim 6, where a warning message is played shortly before the time is up.

8. A communications routing system according to anyone of Claims 1 to 7, used in conjunction with a published advertisement for each category of data, which advertisement displays one or more telephone numbers accessible via the telecommunications network.

9. A communications routing system according to Claim 8, where the telephone numbers displayed in the advertisements are different for each category.

10. A method for routing communications over a telecommunications network, including the following steps:
- receiving calls from the telecommunications network, at least some of which relate to one of a set of categories;
- identifying the category to which an incoming call relates; and
- connecting incoming calls related to a particular category to a call recipient related to the correct category.

11. A method according to Claim 10, including the additional step of receiving and recording details of call recipient and details of the category of calls they wish to receive.

12. A method according to Claim 11, including the additional step of receiving and recording the circumstances in which calls relating to a category are to be routed to a recipient.

13. A method according to anyone of Claims 10 to 12, including the additional step of automatically debiting the accounts of call recipients according to the circumstances in which calls are to be routed to them

14. A method according to anyone of Claims 10 to 13, including the additional step of announcing the incoming call after the call recipient has answered the call.

15. A method according to Claim 10 to Claim 13, including the additional step of publishing an advertisement for each category of data, which advertisement displays respective telephone numbers accessible via the telecommunications network.
